# EUROPÄISCHE PATENTANMELDUNG

(11) **EP 2 006 594 A1**
(43) Veröffentlichungstag der Anmeldung: **24.12.2008**
(21) Anmeldenummer: 08006383.7
(22) Anmeldetag: 31.03.2008
(51) Int. Cl.: F16L 58/10

(54) **Verschlusselement**

(30) Priorität: 22.06.2007 DE 102007028783
(71) Anmelder: VERITAS AG, 63571 Gelnhausen (DE)
(72) Erfinder: Pascuzzi, Sergio, 64347 Griesheim (DE); Rüngener, Claudia, 36396 Steinau a.d. Strasse (DE)
(74) Vertreter: Grünecker, Kinkeldey, Stockmair & Schwanhäusser Anwaltssozietät

(57) **Zusammenfassung**

Die Erfindung betrifft ein Verschlusselement mit Korrosionsinhibitor für das Verschließen von Öffnungen in Hohlkörpern (R), insbesondere Rohren, welches zumindest abschnittsweise aus Kunststoff besteht. In dem Stand der Technik sind Verschlusselemente bekannt, die mit einem Korrosionsinhibitor beschichtet sind, bzw. an welchen ein Korrosionsinhibitor angebracht ist. Der Erfindung liegt die Aufgabe zugrunde ein Verschlusselement zu beschreiben, welches auf einfache Weise eine Korrosionsbildung verhindert. Zur Lösung dieser Aufgabe stellt die Erfindung ein Verschlusselement für das Verschließen von Hohlkörpern (R) bereit, wobei dieses zumindest abschnittsweise aus Kunststoff besteht und der Kunststoff zumindest abschnittsweise den Korrosionsinhibitor aufweist.

## Beschreibung

Die vorliegende Erfindung betrifft ein Verschlusselement mit Korrosionsinhibitor für das Verschließen von Öffnungen in Hohlkörpern, insbesondere Rohren, welches zumindest abschnittsweise aus Kunststoff besteht sowie zwei Verfahren zu dessen Herstellung.

Bestimmte Rohre, wie z.B. Kraftstoffleitungen, können nicht durch Beschichtung von Innen vor Korrosion geschützt werden. Wenn diese Rohre beispielsweise vor ihrem Einbau transportiert werden müssen, dann kann es zu korrosiven Erscheinungen kommen. Für diesen Zweck sind sogenannte Korrosionsinhibitoren engl. volatile corrosion inhibitor (VCI) bekannt, welche flüssig oder pulverförmig sein können, und in die Nähe der Rohre gebracht werden. Diese Korrosionsinhibitoren verhindern einen lonenaustausch zwischen den zu schützenden Materialien und ermöglichen somit eine problemlose weitere Verarbeitung dieser Materialien. Mittels dieser Korrosionsinhibitoren ist es beispielsweise möglich, Rohre in einer Verpackung zu transportieren, wobei sich in der Verpackung ein Korrosionsinhibitor befindet, welcher dafür sorgt, dass die Atmosphäre in der Verpackung keine Korrosion zulässt. Jedoch besteht bei dieser Variante der Nachteil, dass große Mengen des Inhibitors benötigt werden und diese auch leicht in die Umgebung entweichen. Weiterhin besteht die Möglichkeit, den Korrosionsinhibitor in flüssiger Form direkt in ein Rohr zu füllen und dieses dann mit einer Verschlusskappe zu versehen, damit der Korrosionsinhibitor nicht entweicht. Nach Gebrauch entsteht dabei aber ein Entsorgungsproblem welches mit hohen Kosten verbunden ist.

Die Patentschrift DE 27 28 498 B1 zeigt einen Korrosionsinhibitor in Tablettenform, der an einem Deckel zu befestigen ist, wobei der Deckel ein Rohr verschließt. Der Korrosionsinhibitor verdampft und schützt die inneren Oberflächen der Rohre. Der Verschluss des Rohrs mit einer Verschlusskappe hat außerdem den Vorteil, dass während eines Transports keinerlei Verschmutzungen in das Rohr gelangen können. Allerdings ist die Befestigung des Korrosionsinhibitors an dem Deckel aufwändig und wenn die Rohre einen geringen Durchmesser aufweisen, ist diese Lösung überhaupt nicht realisierbar.

Der Erfindung liegt daher die Aufgabe zugrunde, die erwähnten Nachteile des Standes der Technik zu vermeiden und ein Verschlusselement mit Korrosionsinhibitor für das Verschließen von Öffnungen von Hohlkörpern, insbesondere Rohren zu schaffen, welches auf einfache Weise eine Korrosionsbildung verhindert.

Die oben genannte Aufgabe wird durch ein Verschlusselement mit Korrosionsinhibitor für das Verschließen von Öffnungen in Hohlkörpern, insbesondere Rohren, welches zumindest abschnittsweise aus Kunststoff besteht, dadurch gelöst, dass der Kunststoff zumindest abschnittsweise den Korrosionsinhibitor aufweist. Weiterhin werden zwei Verfahren zur Herstellung eines Verschlusselements aufgezeigt.

Bei dem erfindungsgemäßen Verschlusselement befindet sich ein Korrosionsinhibitor direkt in dem Kunststoff und kann von diesem in die Gasphase übergehen, wobei dadurch innerhalb eines Hohlkörpers der Korrosionsschutz gewährleistet wird. Außerdem hat die Erfindung den Vorteil, dass wenn eine Leitung oder mehrere Leitungen in einem Behältnis transportiert werden, welches einen Gasaustausch erschwert, auch der Außenbereich der Leitungen gegen Korrosion geschützt ist.

In einer bevorzugten Ausführungsform kann der Kunststoff ein Polymer wie z.B. PA oder PE aufweisen bzw. vollständig ein Polymer sein. Insbesondere kommt als Kunststoff ein Elastomer in Betracht wie z.B. TPE (thermoplastisch verarbeitbarer Elastomer). Ein solcher Kunststoff kann durch z.B. Spritzguss hergestellt werden und ist für eine solche Anwendung besonders geeignet.

In einer weiteren bevorzugten Ausführungsform kann der Korrosionsinhibitor für das Verschlusselement zu einer Herstellmischung des Kunststoffs beigemischt sein. Aufgrund dieser Beimischung in einer frühen Phase der Herstellung kann der Korrosionsinhibitor auf einfache Art und Weise in das Verschlusselement eingebracht werden. Durch Änderung der Konzentration des Korrosionsinhibitors aufgrund z.B. einer Änderung der Geometrie des Verschlusselements, kann auch die Dauer und Wirkung des Korrosionsinhibitors in Abhängigkeit der zu schützenden Fläche verändert werden.

Vorteilhaft kann ein Trägerabschnitt des Verschlusselements in den zu verschließenden Hohlkörper hineinragen, dadurch gelangt der Korrosionsinhibitor, welcher sich in dem Trägerabschnitt befindet, leichter an den zu schützenden Bereich bzw. an die zu schützende innere Oberfläche.

Günstig kann es auch sein, wenn der Trägerabschnitt als Vorsprung ausgebildet ist und somit eine gleichmäßige Abdampfung des Korrosionsinhibitors ermöglicht.

In einer weiteren bevorzugten Ausführungsform wird ein Verschlusselement offenbart, worin sich der Korrosionsinhibitor nur in dem Trägerabschnitt befinden kann, bzw. der Trägerabschnitt einen Korrosionsinhibitor trägt. Das bedeutet, dass z.B. ein Trägerabschnitt extra hergestellt werden kann, der dann den Korrosionsinhibitor beinhaltet. Dadurch kann der Trägerabschnitt aus einem anderen Material bestehen, welches z.B. für die Aufnahme eines Korrosionsinhibitors besonders geeignet ist. Der Trägerabschnitt kann in seiner geometrischen Form unterschiedlich ausgebildet sein. Insbesondere kann dafür eine zylinderförmige, konusförmige, kugelförmige oder prismenförmige Form vorteilhaft sein.

In einer weiteren bevorzugten Ausführungsform kann der Trägerabschnitt durch eine stoffschlüssige und/oder formschlüssige Verbindung an dem Verschlusselement befestigt werden. Durch diese Befestigung kann der Trägerabschnitt schnell und kostengünstig an dem Grundkörper des Verschlusselements angebracht werden. Denkbar ist auch, den Trägerabschnitt durch ein Fügeverfahren, Extrudieren und/oder Spritzgießen zu befestigen.

In einer weiteren bevorzugten Ausführungsform kann das Verschlusselement einen rotationssymmetrischen Querschnitt bezüglich der Längsachse aufweisen. Dieser rotationssymmetrische Querschnitt ermöglicht eine einfache und kostengünstige Herstellung durch z.B. Spritzgießen.

Günstigerweise kann ein Verschlusselement der erfindungsgemäßen Art einen Aufnahmeabschnitt aufweisen. Dieser ist vorzugsweise hohlzylinderförmig und dafür vorgesehen, das Verschlusselement zuverlässig an dem Hohlkörper anzubringen.

Vorteilhafterweise kann das Verschlusselement auch ein Montageabschnitt zur Erleichterung der Montage desselbigen an dem Hohlkörper aufweisen.

In einer weiteren bevorzugten Ausführungsform kann das Verschlusselement so konstruiert sei, dass der Aufnahmeabschnitt und der Montageabschnitt genau gegenüber liegen. Durch diese gegenüberliegende Anordnung können mehrere mit einem Verschlusselement verschlossene Rohre übereinander gestapelt werden, ohne dass die Verschlusselemente sich gegenseitig behindern.

In einer weiteren bevorzugten Ausführungsform kann das Verschlusselement zwischen dem Aufnahmeabschnitt und dem Montageabschnitt einen Verbindungsabschnitt aufweise, dieser ist etwas schmaler geformt und unterstützt somit die Handhabung bei der Montage.

In einer weiteren bevorzugten Ausführungsform kann das Verschlusselement an dem äußeren Ende des Montageabschnitts einen torusförmigen Griff haben. Mittels dessen kann das Verschlusselement leicht auf den zu verschließenden Hohlkörper aufgeschoben werden.

Es hat sich als vorteilhaft erwiesen, den Verbindungsabschnitt zylinderförmig auszuführen. Dies erleichtert die Herstellung und auch die Handhabung des Verschlusselements.

In einer weiteren bevorzugten Ausführungsform kann der Durchmesser des Verbindungsabschnitts kleiner als der Durchmesser des Griffs sein. Dadurch wird Material eingespart und die montierende Person kann mit den Fingern den Verbindungsabschnitt umfassen und somit leichter das Verschlusselement auf den zu verschließenden Hohlkörper befestigen.

In einer weiteren bevorzugten Ausführungsform kann der Trägerabschnitt sich konzentrisch in Bezug zu dem Aufnahmeabschnitt befinden. Der Trägerabschnitt ist somit auch konzentrisch zu einer inneren Rohroberfläche, dadurch ist der Trägerabschnitt von Luft umgeben und der Korrosionsinhibitor kann gleichmäßig verdampfen.

In einer weiteren bevorzugten Ausführungsform kann der Aufnahmeabschnitt länger als der Trägerabschnitt sein, damit eine sichere Befestigung des Verschlusselements an dem Halbzeug gewährleistet werden kann.

In einer weiteren bevorzugten Ausführungsform kann der Aufnahmeabschnitt eine Schräge bzw. Phase auf einer inneren Oberfläche aufweisen, wobei diese Phase die Montage des Verschlusselements an dem Hohlkörper erleichtert.

In einer weiteren bevorzugten Ausführungsform kann die Ausdehnung des Verschlusselements in Längsrichtung größer als die Ausdehnung in Querrichtung sein. Dies gewährleistet eine gute Stapelbarkeit und eine gute Handhabung.

In einer weiteren bevorzugten Ausführungsform kann der äußere Durchmesser des Griffs größer als der äußere Durchmesser des Aufnahmeabschnitts sein.

Die Erfindung betrifft auch ein Verfahren zur Herstellung eines Verschlusselements, umfassend die Schritte: Bereitstellen von wenigstens einer Kunststoffkomponente und Beimischung von wenigstens einem Korrosionsinhibitor zu dieser Kunststoffkomponente.

Die Erfindung betrifft weiterhin ein Verfahren zur Herstellung eines Verschlusselements, umfassend die Schritte: Herstellung eines Trägerabschnitts welcher einen Korrosionsinhibitor aufweist, Herstellung eines Verschlusselements und Befestigung des Trägerabschnitts an dem Verschlusselement.

Die vorliegende Erfindung wird nachstehend mit Bezug auf die beiliegenden Zeichnungen im Detail beschrieben.
- Figur 1:: zeigt ein erfindungsgemäßes Verschlusselement im Querschnitt
- Figur 2:: zeigt ein erfindungsgemäßes Verschlusselement, welches an einem Hohlkörper befestigt ist.
- Figur 3:: zeigt ein erfindungsgemäßes Verschlusselement einer zweiten Ausführungsform.

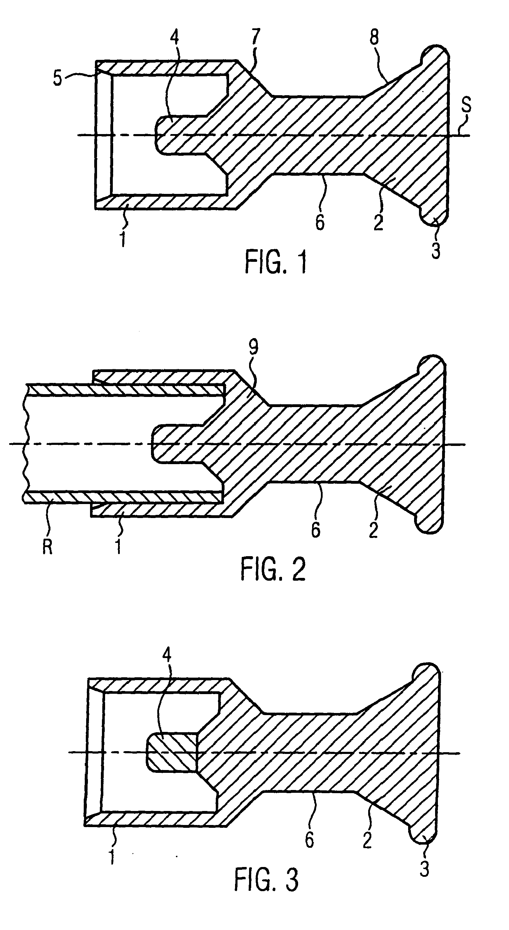

Figur 1 zeigt ein erfindungsgemäßes Verschlusselement einer bevorzugten Ausführungsform in einer Schnittdarstellung, dabei ist eine Symmetrielinie S in Längsrichtung zu sehen. Bezüglich dieser Symmetrielinie S ist das Verschlusselement rotationssymmetrisch aufgebaut. An einem linken Ende ist der Aufnahmeabschnitt 1 zu erkennen, wobei dieser hohlzylinderförmig ist und auf einer inneren Oberfläche eine Phase 5 aufweist, mit der das Verschlusselement auf ein Rohr R siehe Fig. 2, geschoben werden kann. Weiterhin ist innerhalb des Aufnahmeabschnitt 1 ein Trägerabschnitt 4 zu sehen, der in das Rohr R hineinragt. Bei einer Montage wird das Verschlusselement dabei so auf das Rohr R geschoben, dass ein hinterer Abschnitt des Aufnahmeabschnitt 1 an einer Außenkante des Rohrs R anstößt.

Der Trägerabschnitt 4 ragt in das Rohr R hinein, wobei sich ein Korrosionsinhibitor vorzugsweise darin befindet, welcher dann verdampft und das Rohr R vor Korrosion schützt. Der Korrosionsinhibitor kann sich in dem Trägerabschnitt 4 befinden, oder aber er kann Bestandteil des gesamten Verschlusselements sein.

Die äußere Länge des Befestigungsteils ist länger als der Trägerabschnitt 4, da der Aufnahmeabschnitt 1 in erster Linie dazu dient, das Verschlusselement sicher an dem Rohr R zu befestigen. Im Gegensatz dazu soll der Trägerabschnitt 4 das korrosionsschützende Medium tragen und kann dementsprechend in Form und Größe für diesen Zweck angepasst werden. In der bevorzugten vorliegenden Ausführungsform ist der Trägerabschnitt 4 zylindrisch ausgebildet und er ist geometrisch so angeordnet, dass er konzentrisch zum äußeren Aufnahmeabschnitt 1 vorliegt. Ebenso kann der Trägerabschnitt 4 eine kegelförmige, kugelförmige, zylinderförmige oder konusförmige Ausgestaltung haben.

An den Aufnahmeabschnitt 1 schließt sich in einer Richtung nach rechts ein Verbindungsabschnitt 6 an, wobei zwischen den beiden vorgenannten Abschnitten 1,6 sich eine Schräge 7 befindet. Dieser Verbindungsabschnitt 6 ist zylindrisch ausgebildet und dient auch dazu, die Montage zu erleichtern.

An den Verbindungsabschnitt 6 schließt sich ein Montageabschnitt 2 an, wobei dieser wieder mit einer Schräge 8 verbunden ist. An einem äußeren rechten Ende ist ein Griff 3 ausgebildet, der außen eine torusförmige Form aufweist. Diese Form des Griffs 3 ist auch für eine erleichterte Montage gedacht.

An diesem Ausführungsbeispiel ist weiterhin zu erkennen, dass ein äußerer Durchmesser des Griffs 3 größer ist, als ein äußerer Durchmesser des Befestigungsabschnitts 2. Für eine Reduzierung des Gewichts des Verschlusselements kann der Montageabschnitt 2 bzw. der Griff 3 innen hohl ausgeführt sein.

Im Folgenden wird die Wirkung und Funktion der Erfindung erläutert. Mittels des Griffs 3 wird der Aufnahmeabschnitt 1 jeweils an einem Rohrende befestigt, in dem dieser auf die Rohroberfläche aufgeschoben wird. Das Rohr R ist somit von beiden Seiten mit einem Verschlusselement verschlossen. Innerhalb des Rohrs R befindet sich atmosphärische Luft, die im Laufe der Zeit mit einem Korrosionsinhibitor angereichert wird, da dieser aus den Enden der Verschlusselemente hinaus diffundiert. Dadurch wird eine Korrosion im Inneren der Rohre R verhindert.

Vor einer weiteren Verwendung der Rohre R können die Verschlusselemente leicht entfernt werden und somit können die Rohre R sofort an z.B. einem Fahrzeug montiert werden.

Im Weiteren soll ein Verfahren zur Herstellung des Verschlusselements der bevorzugten Ausführungsform näher beschrieben werden. Das Verfahren beginnt mit der Bereitstellung von wenigstens einer Kunststoffkomponente und Beimischung von wenigstens einem Korrosionsinhibitor zu dieser Kunststoffkomponente. Dadurch befindet sich der Korrosionsinhibitor nachfolgend in dem Verschlusselement.

Die Figur 3 zeigt eine weitere Ausführungsform eines erfindungsgemäßen Verschlusselements. Bei dieser Ausführungsform besteht der Trägerabschnitt 4 aus einem anderen Material als der restliche Werkstoff. Dadurch ist es möglich, für den Trägerabschnitt 4 ein Material einzusetzen, welches insbesondere dafür geeignet ist, einen Korrosionsinhibitor aufzunehmen, bzw. zu tragen. Für das Material des Trägerabschnitts 4 kommt in erster Linie Kunststoff zum Einsatz. Es ist allerdings auch denkbar, ein anorganisches Material einzusetzen. Der Trägerabschnitt 4 wird vor der Verwendung des Verschlusselements an dem Grundkörper 9 angebracht, z.B. durch Kleben. Es ist allerdings auch denkbar, ein anderes Befestigungsverfahren wie z.B. Schrauben für die Befestigung zu verwenden.

Im Folgenden wird die Wirkung und Funktion der weiteren Ausführungsform beschrieben. Durch die Verwendung eines separaten Trägerabschnitts 4, kann der Korrosionsinhibitor noch gezielter in die zu schützende Atmosphäre des Rohrs R gebracht werden. Denn der Trägerabschnitt 4 ragt in das Rohr R hinein und ist außenseitig mit Luft umgeben. Dadurch kann der Korrosionsinhibitor leicht durch Diffusion entweichen und gelangt direkt an die zu schützenden Flächen.

Weiterhin ist durch eine separate Materialwahl für den Trägerabschnitt 4 eine bessere Selektivität für die Korrosionswirkung möglich, da das Material auf den Korrosionsinhibitor abgestimmt werden kann. Für den Trägerabschnitt 4 kann somit z.B. ein Material gewählt werden, das besonders viel Korrosionsinhibitor enthält bzw. aufnehmen und abgeben kann. Es ist somit eine funktionsbezogene Materialwahl von Trägerabschnitt 4 und Grundkörper 9 möglich.

Nachfolgend wird ein Verfahren zur Herstellung eines Verschlusselements gemäß der weiteren Ausführungsform beschrieben. Es umfasst die Schritte: Herstellung eines Trägerabschnitts 4 welcher einen Korrosionsinhibitor aufweist, Herstellung eines Verschlusselements bzw. Grundkörpers 9 und Befestigung des Trägerabschnitts 4 an dem Grundkörper 9.

## Patentansprüche

1. Verschlusselement mit Korrosionsinhibitor für das Verschließen von Öffnungen in Hohlkörpern, insbesondere Rohren, welches zumindest abschnittsweise aus Kunststoff besteht
**dadurch gekennzeichnet, dass**
der Kunststoff zumindest abschnittsweise den Korrosionsinhibitor aufweist.

2. Verschlusselement nach Anspruch 1, **dadurch gekennzeichnet, dass** der Kunststoff ein Polymer, vorzugsweise ein Elastomer oder ein TPE aufweist.

3. Verschlusselement nach Anspruch 1 oder 2, **dadurch gekennzeichnet, dass** der Korrosionsinhibitor zu einer Herstellmischung des Kunststoffs beigemischt ist.

4. Verschlusselement nach zumindest einem der vorgenannten Ansprüche, **dadurch gekennzeichnet, dass** wenigstens ein Trägerabschnitt in den zu verschließenden Hohlkörper hinein ragt.

5. Verschlusselement nach zumindest einem der vorgenannten Ansprüche, **dadurch gekennzeichnet, dass** der Trägerabschnitt als Vorsprung ausgebildet ist.

6. Verschlusselement nach zumindest einem der vorgenannten Ansprüche, **dadurch gekennzeichnet, dass** sich der Korrosionsinhibitor nur in dem Trägerabschnitt befindet bzw. dieser den Korrosionsinhibitor trägt.

7. Verschlusselement nach zumindest einem der vorgenannten Ansprüche, **dadurch gekennzeichnet, dass** der Trägerabschnitt ein Material aufweist, dass sich von dem Material des restlichen Verschlusselements zumindest bereichsweise unterscheidet.

8. Verschlusselement nach zumindest einem der vorgenannten Ansprüche, **dadurch gekennzeichnet, dass** der Trägerabschnitt zumindest bereichsweise zylinderförmig, konusförmig, kugelförmig oder prismenförmig ist.

9. Verschlusselement nach zumindest einem der vorgenannten Ansprüche, **dadurch gekennzeichnet, dass** der Trägerabschnitt separat gefertigt wird und anschließend durch eine stoffschlüssige und/oder formschlüssige Verbindung an dem Verschlusselement befestigbar ist.

10. Verschlusselement nach zumindest einem der vorgenannten Ansprüche, **dadurch gekennzeichnet, dass** der Trägerabschnitt durch ein Fügeverfahren, Extrudieren und/oder Spritzgießen an dem Verschlusselement befestigt ist.

11. Verschlusselement nach zumindest einem der vorgenannten Ansprüche, **dadurch gekennzeichnet, dass** das Verschlusselement einen rotationssymmetrischen Querschnitt bezüglich der Längsachse aufweist.

12. Verschlusselement nach zumindest einem der vorgenannten Ansprüche, **dadurch gekennzeichnet, dass** das Verschlusselement einen hohlzylindrischen Aufnahmeabschnitt für die Aufnahme eines Hohlkörpers aufweist.

13. Verschlusselement nach zumindest einem der vorgenannten Ansprüche, **dadurch gekennzeichnet, dass** das Verschlusselement einen Montageabschnitt zum Montieren desselbigen an dem Hohlkörper aufweist.

14. Verschlusselement nach zumindest einem der vorgenannten Ansprüche, **dadurch gekennzeichnet, dass** der Aufnahmeabschnitt gegenüber liegend zu dem Montageabschnitt angeordnet ist.

15. Verschlusselement nach zumindest einem der vorgenannten Ansprüche, **dadurch gekennzeichnet, dass** sich zwischen dem Aufnahmeabschnitt und dem Montageabschnitt ein Verbindungsabschnitt befindet.

16. Verschlusselement nach zumindest einem der vorgenannten Ansprüche, **dadurch gekennzeichnet, dass** der Montageabschnitt an seinem äußeren Ende einen torusförmigen Griff aufweist.

17. Verschlusselement nach zumindest einem der vorgenannten Ansprüche, **dadurch gekennzeichnet, dass** der Verbindungsabschnitt zylinderförmig ist.

18. Verschlusselement nach zumindest einem der vorgenannten Ansprüche, **dadurch gekennzeichnet, dass** der Durchmesser des Verbindungsabschnitts kleiner als der Durchmesser des Griffs ist.

19. Verschlusselement nach zumindest einem der vorgenannten Ansprüche, **dadurch gekennzeichnet, dass** sich der Trägerabschnitt konzentrisch in Bezug zu dem Aufnahmeabschnitt befindet.

20. Verschlusselement nach zumindest einem der vorgenannten Ansprüche, **dadurch gekennzeichnet, dass** der Aufnahmeabschnitt länger als der Trägerabschnitt ist.

21. Verschlusselement nach zumindest einem der vorgenannten Ansprüche, **dadurch gekennzeichnet, dass** der Aufnahmeabschnitt eine Schräge/Phase auf einer inneren Oberfläche aufweist.

22. Verschlusselement nach zumindest einem der vorgenannten Ansprüche, **dadurch gekennzeichnet, dass** die Ausdehnung in Längsrichtung größer als die Ausdehnung in Querrichtung ist.

23. Verschlusselement nach zumindest einem der vorgenannten Ansprüche, **dadurch gekennzeichnet, dass** ein äußerer Durchmesser des Griffs größer als ein äußerer Durchmesser des Aufnahmeabschnitts ist.

24. Verfahren zur Herstellung eines Verschlusselements umfassend die Schritte: Bereitstellen von wenigstens einer Kunststoffkomponente und Beimischung von wenigstens einem Korrosionsinhibitor zu dieser Kunststoffkomponente.

25. Verfahren zur Herstellung eines Verschlusselements umfassend die Schritte: Herstellung eines Trägerabschnitts welcher einen Korrosionsinhibitor aufweist, Herstellung eines Verschlusselements und Befestigung des Trägerabschnitts an dem Verschlusselement.
